Europäisches Patentamt

European Patent Office

Office européen des brevets

(19)

(11) Veröffentlichungsnummer: **0 342 488 B1**

(12) **EUROPÄISCHE PATENTSCHRIFT**

(45) Veröffentlichungstag der Patentschrift: **15.09.93**

(51) Int. Cl.⁵: **C04B** **35/06**, C04B 35/02, C04B 35/00

(21) Anmeldenummer: **89108358.6**

(22) Anmeldetag: **10.05.89**

(54) **Verfahren zur Herstellung von feuerfesten Formkörpern.**

(30) Priorität: **14.05.88 DE 3816571**

(43) Veröffentlichungstag der Anmeldung:
**23.11.89 Patentblatt 89/47**

(45) Bekanntmachung des Hinweises auf die
Patenterteilung:
**15.09.93 Patentblatt 93/37**

(84) Benannte Vertragsstaaten:
**AT BE DE ES FR GB IT LU NL SE**

(56) Entgegenhaltungen:
**AU-A- 61 418
DE-A- 2 810 043
GB-A- 1 344 618
US-A- 3 058 736**

(73) Patentinhaber: **DOLOMITWERKE GMBH
Postfach 1380
D-42480 Wülfrath(DE)**

(72) Erfinder: **Haupt, Hans Jürgen,
Dr.-Ing.Dipl.-Chem.
Taunusstrasse 31
D-5800 Hagen(DE)**
Erfinder: **Richrath, Herbert
Eduard-Müller-Strasse 18
D-5800 Hagen(DE)**
Erfinder: **Prange, Rainer, Dr.-Ing. Dipl.-Chem.
In der Asmecke 17
D-5800 Hagen(DE)**
Erfinder: **Roeder, Alfred, Dr. rer. nat.
Dipl.-Phys.
Falkstrasse 112
D-4100 Duisburg(DE)**
Erfinder: **Stradtmann, Jürgen, Dr.-Ing.
Dipl.-Ing.
Marienburger Strasse 61
D-5603 Wülfrath(DE)**

**Beschreibung**

Die Erfindung betrifft ein Verfahren zur Herstellung von feuerfesten Formkörpern auf der Basis von Sinterdolomit und/oder Sinterkalk, auch mit Anreicherung durch Magnesiumoxid, sowie unter Zusatz von einem kohlenstoffhaltigen Bindemittel in Massenanteilen bis zu 6 % und einem weiteren Kohlenstoffzusatz in Massenanteilen von 0 bis 20 %.

Es ist allgemein bekannt, bei feuerfesten Formkörpern zur Nutzung der Kohlenstoffbindung als Bindemittel Teere, Peche, Bitumen oder Kunstharze zu verwenden. Bei feuerfesten Formkörpern auf Basis von Dolomit wurde in der DE-OS 36 20 473 außerdem vorgeschlagen, Rückstände aus der Herstellung von Dimethylterephthalat einzusetzen. Die Bindemittel werden üblicherweise in Massenanteilen von 3 bis 6 % zur feuerfesten Grundmischung zugegeben. Sie enthalten in der Regel 40 bis 80 % flüchtige Bestandteile.

Aus der DE-PS 915 675 ist bekannt, die Formkörper nach der Formgebung durch eine Temperaturbehandlung bis 350 °C zu vergüten. Bei dieser sogenannten Temperung werden aber nur 5 bis 20 % der flüchtigen Anteile ausgetrieben. Die restlichen Anteile werden erst nach Einbau in zum Beispiel metallurgische Gefäße oder Öfen beim ersten Aufheizen in Form von Pyrolyseprodukten aus organischem Material, u.a. auch polycyclische aromatische Kohlenwasserstoffe, freigesetzt. Dies ist aus Gründen des Umweltschutzes unerwünscht.

Die GB-PS 1 501 143 schlägt zur Vermeidung dieses Problems vor, die feuerfesten Formkörper nach der Formgebung einer Temperaturbehandlung im Bereich von 200 bis 800 °C zu unterwerfen. Im Temperaturbereich oberhalb 350 °C müssen aber besondere Vorkehrungen getroffen werden, um unerwünschte chemische Reaktionen wie zum Beispiel Oxidation des Bindemittels ggf. auch des Kohlenstoffs der Steine durch Sauerstoff oder Wasserdampf im Ofenraum zu vermeiden.

Gegenüber der üblichen Temperung bis 350 °C haben aber die so erhaltenen feuerfesten Formkörper eine verminderte Lagerhaltbarkeit. Mißt man die Lagerhaltbarkeit mit einem Hydratationstest an Luft von 30 °C und 75 % relativer Feuchte als die Zeit, in der die Längenausdehnung der Formkörper unter 0,1 % bleibt, so sollte die Haltbarkeit mindestens 50 Stunden betragen.

Der Erfindung liegt das technische Problem zugrunde, bei dem eingangs beschriebenen Verfahren nach dem Oberbegriff eine Hochtemperaturtemperung anzuwenden, den Kohlenstoffabbrand zu vermeiden, und zugleich eine Lagerhaltbarkeit der erhaltenen feuerfesten Formkörper von mehr als 50 Stunden zu erzielen.

Das technische Problem wird dadurch gelöst, daß die Formkörper in einem Ofen, dessen Ofenatmosphäre einen Volumenanteil an Sauerstoff < 2 % und einen Volumenanteil an Kohlendioxid ($CO_2$) > 8 % aufweist, einer Temperaturbehandlung bis 800 °C unterworfen werden. Es hat sich als vorteilhaft herausgestellt, wenn der $CO_2$-Volumenanteil mindestens 20 % beträgt.

Es werden feuerfeste Formkörper erhalten, die beim Einsatz in metallurgischen Gefäßen, insbesondere Pfannen zur Stahlbehandlung, beim Aufheizen praktisch nicht qualmen. Die Lagerhaltbarkeit ist gegenüber der Temperung in einer Ofenatmosphäre, die als Inertgas im wesentlichen aus Stickstoff (Nz) besteht, um das Zehnfache gesteigert. Im Vergleich zu normal vergüteten Steinen (bei 350 °C) ist sie immer noch doppelt so groß.

Dem Ofenraum kann ein $CO_2$-haltiges Gas zugeführt werden. Die Regelung der Ofenatmosphäre ist dann in einfacher Weise möglich. Neben oder anstelle von direkter Beaufschlagung mit $CO_2$-haltigem Gas ist es aber auch möglich, die Formkörper in eine Körnung von Materialien einzubetten, die bei der Temperaturbehandlung $CO_2$ abgeben. Geeignet ist zum Beispiel Rohmagnesit-Splitt oder Rohdolomit, der bei der erhöhten Tempertemperatur (bis 800 °C) ganz bzw. teilweise entsäuert wird und $CO_2$ freisetzt.

Es ist vorteilhaft, wenn die Formkörper Zusätze enthalten, die bei der Temperaturbehandlung $CO_2$ abgeben. Geeignet sind dafür zum Beispiel Bindemittel auf der Basis von Rückständen aus der Herstellung von Dimethylterephthalat und/oder anorganische oder organische Salze wie zum Beispiel Karbonate, Salze von Karbonsäuren usw. Zusätzlich muß aber immer aus anderen Quellen $CO_2$ zugeführt werden.

Bisher war es üblich, die Hochtemperaturtemperung in einem Chargenofen, der zweckmäßigerweise indirekt beheizt wird, oder in einem kontinuierlich betriebenen Tunnelofen durchzuführen, bei dem die Formkörper durch übergestülpte Hauben vor den sauerstoffhaltigen Rauchgasen geschützt werden. Diese "Haubenwirtschaft" ist aufwendig und kommt für den Durchsatz großer Steinmengen nicht in Betracht.

Das erfindungsgemäße Verfahren ermöglicht auch bei einem kontinuierlich betriebenen Tunnelofen den Durchsatz großer Steinmengen (> 20.000 t/a). Die Formkörper sind direkt der Ofenatmosphäre ausgesetzt, die in den einzelnen Ofenabschnitten nach der Erfindung auf die erforderlichen $CO_2$-Volumenanteile > 8 % und die niedrigen Sauerstoff-Volumenanteile < 2 % eingestellt wird.

Der Tunnelofen kann in drei hinsichtlich der Temperatur charakterisierte Zonen unterteilt werden, nämlich die Aufheizzone (von Umgebungstemperatur bis ca. 300 °C), die Hochtemperaturzone (von 300 °C bis zur Tempertemperatur) und die Kühlzone (von Tempertemperatur bis 200 °C). Die Tempertemperatur berträgt bis zu 800 °C.

An den Ein- und Ausfahrseiten wird der Innenraum des Tunnelofens durch ein doppelklappiges Schleusensystem von der Außenatmosphäre abgetrennt, so daß keine sauerstoffhaltige Außenluft in den Innenraum gelangen kann. In den Raum zwischen den beiden Klappen der jeweiligen Schleuse wird zur weiteren Abdichtung $CO_2$-Gas und/oder Inertgas mit leichtem Überdruck gegenüber der Außenatmosphäre in ausreichender Menge eingeleitet.

Sowohl in der Aufheizzone auf Temperaturen bis ca. 300 °C und in der Kühlzone, in der die Steine von der Temperatur der Hochtemperaturzone auf etwa 200 °C heruntergekühlt werden (mit dieser Temperatur verlassen die Steine durch die Ausgangsschleuse den Ofen), sind Kalksinter-, Dolomit- und Dolomit-Magnesia-Mischsteine äußerst hydratationsempfindlich. Während aber in der Aufheizzone dieser Hydratationsempfindlichkeit durch schnelles Aufheizen der Steine begegnet werden kann, ist eine beliebig schnelle Abkühlung nicht möglich. In der Kühlzone, die am besten durch eine Klappe oder ebenfalls durch ein Schleusensystem von der Hochtemperaturzone gasseitig getrennt ist, erfolgt die Kühlung mit $CO_2$-haltigem Inertgas mit niedrigem Wasserdampfgehalt, der durch geeignete technische Maßnahmen auf < 20 g $H_2O/m^3$ eingestellt wird.

In der Aufheizzone, vor allem aber in der Hochtemperaturzone, werden die flüchtigen Anteile der Bindemittel ausgetrieben. Diese flüchtigen Anteile können bis zu 3 % der Masse der Formkörper betragen.

Die flüchtigen Anteile gelangen in die Ofenatmosphäre, die aus im Kreislauf (über Wärmetauscher) geführten Ofengasen gebildet wird. Ein Teil der Ofengase wird kontinuierlich der Nachverbrennung zugeführt und die bei der Nachverbrennung anfallende Wärmemenge wird über geeignete Aggregate (zum Beispiel Wärmetauscher) wieder dem Temperaturprozeß zugeführt.

Es ist auf diese Weise möglich, den Energiebedarf des Hochtemperaturtemperprozesses zum überwiegenden Teil aus der bei der Verbrennung der flüchtigen Anteile der Bindemittel freiwerdenden Wärmemenge zu decken.

Die Erfindung wird anhand der folgenden Beispiele näher erläutert.

Tabelle

Ausgewählte Eigenschaften feuerfester Formkörper

1. Beispiele für nach Stand der Technik erhaltene Formkörper, in üblicher Weise getempert, mit großem Gehalt an flüchtigen Stoffen bei ausreichender Lagerhaltbarkeit

| Beispiel Nr. | 1.1 | 1.2 |
|---|---|---|
| Bindemittel | Pech | DMT-R.[1] |
| Spülgas | Luft | Luft |
| Tempertemperatur, °C | 300 | 300 |
| **Formkörper nach Temperung:** | | |
| Rohdichte, $g/cm^3$ | 2,96 | 2,84 |
| Glühverlust, % | 4,50 | 5,24 |
| K D F, $N/mm^2$ | 40 | 54 |
| $CO_2$-Gehalt (Rand), %[2] | < 0,1 | 0,1 |
| Lagerhaltbarkeit, h[3] | 52 | 54 |
| **Formkörper nach Verkoken bei 1000 °C:** | | |
| Verkokungsverlust, % | 2,20 | 3,40 |
| Rest C-Gehalt, % | 2,30 | 1,84 |
| Rohdichte, $g/cm^3$ | 2,86 | 2,83 |
| K D F, $N/mm^2$ | 32 | 46 |

[1] Rückstand aus der Herstellung von Dimethylterephthalat, DMT

[2] Massenanteil an $CO_2$ in einer Oberflächenschicht des Formkörpers

[3] siehe Erläuterung in der Beschreibung

2. Beispiele für nach Stand der Technik erhaltene
   Formkörper, hochtemperaturgetempert, mit niedrigem
   Gehalt an flüchtigen Stoffen bei verminderter
   Lagerhaltbarkeit

| Beispiel Nr. | 2.1 | 2.2 |
|---|---|---|
| Bindemittel | Pech | DMT-R.[1] |
| Spülgas | $N_2$ | $N_2$ |
| Tempertemperatur, °C | 600 | 600 |
| **Formkörper nach Temperung:** | | |
| Rohdichte, $g/cm^3$ | 2,91 | 2,89 |
| Glühverlust, % | 2,66 | 3,23 |
| K D F, $N/mm^2$ | 64 | 58 |
| $CO_2$-Gehalt (Rand), %[2] | 0,1 | 1,07 |
| Lagerhaltbarkeit, h[3] | 11 | 13 |
| **Formkörper nach Verkoken bei 1000 °C:** | | |
| Verkokungsverlust, % | 0,0 | 1,19 |
| Rest C-Gehalt, % | 2,65 | 2,04 |
| Rohdichte, $g/cm^3$ | 2,90 | 2,85 |
| K D F, $N/mm^2$ | 60 | 35 |

[1] Rückstand aus der Herstellung von
    Dimethylterephthalat, DMT

[2] Massenanteil an $CO_2$ in einer
    Oberflächenschicht des Formkörpers

[3] siehe Erläuterung in der Beschreibung

3. Beispiele für nach dem erfindungsgemäßen Verfahren erhaltene Formkörper, hochtemperaturgetempert, mit niedrigem Gehalt an flüchtigen Stoffen bei erhöhter Lagerhaltbarkeit

| Beispiel Nr. | 3.1 | 3.2 | 3.3 | 3.4 |
|---|---|---|---|---|
| Bindemittel | Pech | DMT-R.[1] | DMT-R.[1] | DMT-R.[1] |
| Spülgas [2] | | | | |
| $N_2$, % | 80 | 80 | 82 | – |
| $CO_2$, % | 20 | 20 | 17 | – |
| $O_2$, % | | | 1,3 | – |
| $CO_2$-Abgabe aus Rohdolomiteinbettung | – | – | – | x |
| Tempertemperatur, °C | 600 | 600 | 600 | 600 |
| **Formkörper nach Temperung:** | | | | |
| Rohdichte, g/cm³ | 2,94 | 2,88 | 2,88 | 2,90 |
| Glühverlust, % | 3,02 | 2,89 | 3,39 | 3,87 |
| K D F, N/mm² | 61 | 44 | 51 | 64 |
| $CO_2$-Gehalt, %[3] | 0,66 | 1,36 | 1,45 | 3,45 |
| Lagerhaltbarkeit, h[4] | 51 | 120 | 101 | 81 |
| **Formkörper nach Verkoken bei 1000 °C:** | | | | |
| Verkokungsverlust, % | 0,37 | 1,12 | 1,06 | 1,92 |
| Rest C-Gehalt, % | 2,65 | 1,77 | 2,33 | 1,95 |
| Rohdichte, g/cm³ | 2,92 | 2,86 | 2,86 | 2,85 |
| K D F, N/mm² | 46 | 39 | 40 | 40 |

[1] Rückstand aus der Herstellung von Dimethylterephthalat, DMT

[2] Volumenanteile in %

[3] Massenanteil an $CO_2$ in einer Oberflächenschicht des Formkörpers

[4] siehe Erläuterung in der Beschreibung

**Patentansprüche**

1. Verfahren zur Herstellung von feuerfesten Formkörpern auf der Basis von Sinterdolomit und/oder Sinterkalk, auch mit Anreicherung durch Magnesiumoxid, sowie unter Zusatz von einem kohlenstoffhal-

6

tigen Bindemittel in Massenanteilen bis zu 6 % und einem weiteren Kohlenstoffzusatz in Massenanteilen von 0 bis 20 %, dadurch gekennzeichnet, daß die Formkörper in einem Ofen, dessen Ofenatmosphäre einen Volumenanteil an Sauerstoff < 2 % und einen Volumenanteil an Kohlendioxid ($CO_2$) > 8 % aufweist, einer Temperaturbehandlung bis 800 °C unterworfen werden.

2. Verfahren nach Anspruch 1, dadurch gekennzeichnet, daß dem Ofenraum $CO_2$-haltiges Gas zugeführt wird.

3. Verfahren nach Anspruch 1 oder 2, dadurch gekennzeichnet, daß die feuerfesten Formkörper in eine Körnung von Materialien eingebettet sind, die bei der Temperaturbehandlung $CO_2$ abgeben.

4. Verfahren nach einem der Ansprüche 1 bis 3, dadurch gekennzeichnet, daß die Formkörper Zusätze enthalten, die bei der Temperaturbehandlung $CO_2$ abgeben.

5. Verfahren nach einem der Ansprüche 1 bis 4, dadurch gekennzeichnet, daß der $CO_2$-Volumenanteil mindestens 20 % beträgt.

## Claims

1. A process for the production of shaped refractory bodies based on sintered dolomite and/or sintered lime, also with enrichment by magnesium oxide, as well as with the addition of a carbon-containing binder in proportions of up to 6 % by weight and a further addition of carbon in proportions of 0 to 20 % by weight, characterized in that the shaped bodies are subjected to a heat treatment at a temperature of up to 800 °C in a furnace whose furnace atmosphere has an oxygen concentration of less than 2 % by volume and a carbon dioxide ($CO_2$) concentration of greater than 8 % by volume.

2. A process according to Claim 1, characterized in that $CO_2$-containing gas is fed to the furnace chamber.

3. A process according to Claim 1 or 2, characterized in that the shaped refractory bodies are embedded in a range of grain sizes of materials that release $CO_2$ during the thermal treatment.

4. A process according to one of Claims 1 to 3, characterized in that the shaped bodies contain additives that release $CO_2$ during the thermal treatment.

5. A process according to one of Claims 1 to 4, characterized in that the $CO_2$ concentration is at least 20 % by volume.

## Revendications

1. Procédé de fabrication de pièces moulées réfractaires à base de dolomite frittée et/ou de chaux frittée, également avec enrichissement par de l'oxyde de magnésium, ainsi que par ajout d'un agent liant carboné en pourcentage massique allant jusqu'à 6 % et une addition supplémentaire de Carbone en pourcentage massique allant de 0 à 20 %, caractérisé en ce que les pièces moulées sont soumises dans un four dont l'atmosphère de four possède une fraction de volume en oxygène < 2 % et une fraction de volume en gaz carbonique ($CO_2$) > 8 %, à un traitement thermique jusqu'à 800 °C.

2. Procédé selon la revendication 1, caractérisé en ce qu'un gaz contenant du $CO_2$ est amené dans l'espace du four.

3. Procédé selon la revendication 1 ou 2, caractérisé en ce que les pièces moulées réfractaires sont incluses dans une granulométrie de matériaux qui dégagent, lors du traitement thermique, du $CO_2$.

4. Procédé selon l'une des revendications 1 à 3, caractérisé en ce que les pièces moulées renferment des additifs qui dégagent lors du traitement thermique, du $CO_2$.

5. Procédé selon l'une des revendications 1 à 4, caractérisé en ce que la fraction volumétrique de $CO_2$ s'élève au moins à 20 %.